## Europäisches Patentamt
## European Patent Office
## Office européen des brevets

(19)

(11) Numéro de publication: **0 123 627 B1**

(12) **FASCICULE DE BREVET EUROPÉEN**

(45) Date de publication du fascicule du brevet:
20.05.87

(51) Int. Cl.⁴: **G 02 B 27/64**

(21) Numéro de dépôt: **84400835.9**

(22) Date de dépôt: **25.04.84**

(54) Dispositif de stabilisation d'image pour un périscope de sous-marin.

(30) Priorité: **26.04.83 FR 8306859**

(43) Date de publication de la demande:
**31.10.84 Bulletin 84/44**

(45) Mention de la délivrance du brevet:
**20.05.87 Bulletin 87/21**

(84) Etats contractants désignés:
**AT BE CH DE FR GB IT LI LU NL SE**

(56) Documents cité:
**DE-A-1 901 984**
**FR-A-1 378 507**
**FR-A-1 478 301**
**GB-A-1 039 720**
**GB-A-2 036 998**
**GB-A-2 061 545**
**US-A-2 523 577**
**US-A-3 235 733**
**US-A-3 297 395**
**US-A-3 378 687**

(73) Titulaire: **SOCIETE D'OPTIQUE, PRECISION ELECTRONIQUE ET MECANIQUE - SOPELEM,**
**102 rue Chaptal, F-92300 Levallois- Perret (FR)**

(72) Inventeur: **Moirez, Jacques, 4 avenue des Gobelins, F-75005 Paris (FR)**
Inventeur: **Ragain, Jacques, 31 avenue Raspail, F-95330 Domont (FR)**

(74) Mandataire: **Phélip, Bruno, c/o Cabinet Harlé & Phélip 21, rue de la Rochefoucauld, F-75009 Paris (FR)**

## Description

La présente invention se rapporte à un dispositif de stabilisation d'image pour un périscope de sous-marin. Ce dispositifs applique à un périscope a voie optique ou à voie optronique, à bloc oculaire fixe ou mobile.

Un périscope de sous-marin se compose d'un tube ou mât qui est guidé dans des paliers solidaires de la structure du sous-marin. Il porte à la partie supérieure, une tête d'observation comportant un prisme déviateur qui est orientable en site et qui réfléchit la lumière vers un objectif de tête.

Dans le cas d'un périscope à voie optique, le faisceau lumineux sortant de l'objectif est véhiculé, à l'intérieur du tube, vers un bloc oculaire. Dans le cas d'un périscope à voie optronique, le faisceau lumineux sortant de l'objectif est reçu sur un détecteur (caméra de télévision, tube à intensification de luminance).

Le mât du périscope, lorsqu'il est déployé, est soumis à des efforts qui le font fléchir en écartant la tête de l'axe théorique défini par les paliers. La tête subit ainsi un mouvement de rotation qui provoque des déplacements de l'image du paysage par rapport à l'axe de visée (translations dans le plan de visée et dans le plan transversal et rotations).

On a cherché à stabiliser l'image dans le plan de réticule de tête en utilisant un gyroscope pour corriger l'orientation du prisme de la tête d'observation. Cette solution présente néanmoins des inconvénients.

Pour stabiliser l'image dans le plan focal de l'oculaire malgré les déformations du mât, on a prévu d'équiper les périscopes, conformément au FR-A- 1 478 301, par des systèmes afocaux qui sont montés entre la tête et le bloc oculaire. Toutefois les déformations du mât provoquent une occultation des pupilles. On a aussi prévu un périscope comportant un organe optique accompagnant le fléchissement du mât et compensant le mouvement d'un autre organe optique (FR-A- 1 378 507).

La présente invention a pour but de fournir un dispositif de stabilisation d'image sur le réticule de tête d'une voie optique ou sur le détecteur d'une voie optronique ayant un faible coût et un faible encombrement et présentant une grande insensibilité aux chocs et une faible sensibilité à la dérive. Elle a également pour but de stabiliser l'image dans le plan focal de l'oculaire en évitant l'occultation des faisceaux pupillaires de manière à permettre ainsi de grandes déformations du mât.

Le dispositif selon l'invention est adapté à un périscope de sous-marin comportant un mât périscopique guidé dans des paliers et muni d'une tête d'observation comportant un prisme déviateur à réflexion totale susceptible de pivoter autour d'un axe d'orientation sous l'action de moyens moteurs de manière à déplacer l'axe de visée en site et à réfléchir la lumière venant du paysage vers un objectif centré sur une voie d'observation ou de détection, et il est essentiellement caractérisé par le fait qu'il comprend, sur ladite voie, des moyens pour dévier la direction d'observation perpendiculairement au plan de visée et des moyens pour faire tourner l'image et qu'il comporte des capteurs de mesure de la déformation du mât qui sont fixés sur une partie du mât soumise à la flexion, les signaux desdits capteurs étant envoyés à des moyens de calcul et de commande contrôlant, par des asservissements, les moyens moteurs du prisme de tête, les moyens de déviation de la direction d'observation et les moyens pour faire tourner l'image.

Selon une caractéristique, les moyens de déviation de la direction d'observation sont constitués par un déviateur du type diasporamètre dont les prismes sont déplacés en rotation par un moteur.

Selon une autre caractéristique, les moyens pour faie tourner l'image sont constitués par un prisme.

Selon une caractéristique, les capteurs de mesure sont échelonnés verticalement sur la partie du mât soumise à flexion dans deux plans orthogonaux passant par l'axe longitudinal du mât.

Selon une autre caractéristique, le mât se compose d'un tube extérieur et d'un tube intérieur, les capteurs de mesure étant fixés à l'extérieur de ce tube intérieur.

Selon une autre caractéristique, les capteurs de mesure sont constitués par des jauges d'extensomètrie.

Selon une autre caractéristique, il comporte, entre la tête d'observation et le bloc oculaire, au moins une poutre rigide de support d'un système afocal qui est guidée et portée à l'intérieur du mât par l'intermédiaire de deux rotules.

L'invention va maintenant être décrite avec plus de détails en se référant à des modes de réalisation donnés à titre d'exemples et représentés psr les dessins annexés.

La figure 1 représente schématiquement un périscope à bloc oculaire fixe équipé du dispositif de stabilisation d'image conforme à l'invention.

La figure 2 représente une variante à tête de mât optronique.

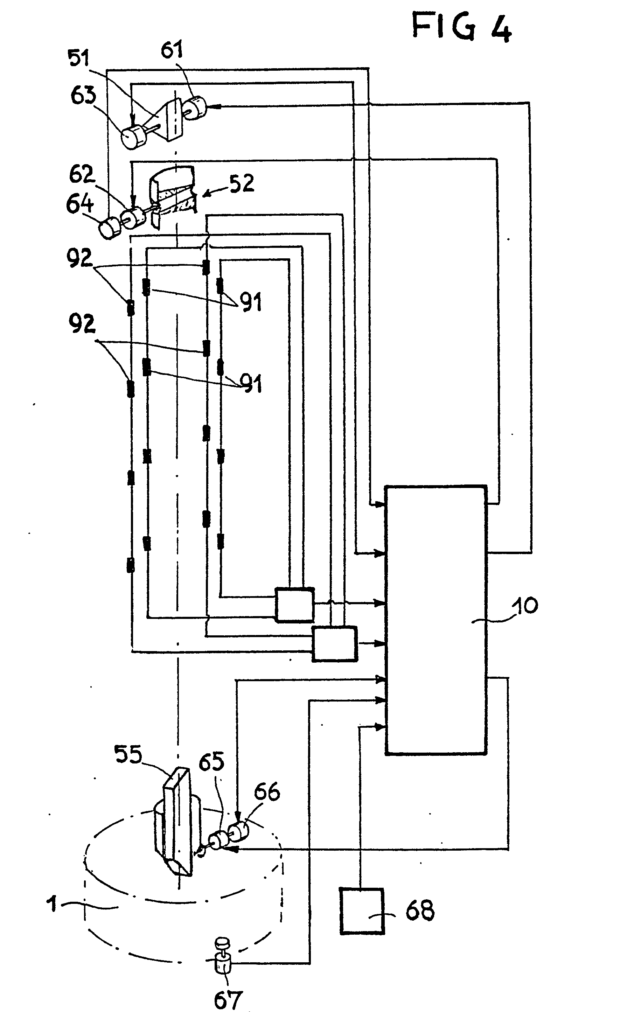

La figure 3 représente le périscope de la figure 1 avec une déformation volontairement amplifiée du mât.

La figure 4 représente un schéma des moyens de calcul et de commande du dispositif.

Le périscope représenté par les dessins comprend un tube ou mât 1 dont l'axe longitudinal est repéré 21. Ce tube est guidé en translation et rotation de manière à être vertical par des paliers 31, 32, solidaires de la structure 33 du sous-marin.

Le tube 1 porte à la partie supérieure une tête d'observation qui est munie d'un prisme de tête à réflexion totale 51 pouvant pivoter autour d'un axe d'orientation 511 parallèle à la surface réfléchissante de manière à déplacer l'axe de visée 22 en site. Le prisme de tête 51 réfléchit la lumière venant du paysage à l'intérieur du tube.

Le prisme de tête est suivi par un déviateur de type diasporamètre 52 centré sur l'axe optique 21. Il est constitué de deux prismes déplacés relativement autour de l'axe optique par un moteur 62. Ce diasporamètre a pour fonction de dévier la direction d'observation perpendiculairement au plan de visée (plan vertical passant par la direction de l'objet observé). En arrière du diasporamètre 52, le faisceau traverse l'objectif de tête 53 centré sur l'axe optique.

Le faisceau lumineux est focalisé sur un réticule 54 situé en arrière de l'objectif, sur l'axe optique.

Un bloc d'observation 4, disposé à la partie inférieure du périscope reprend le faisceau lumineux à la sortie du tube 1.

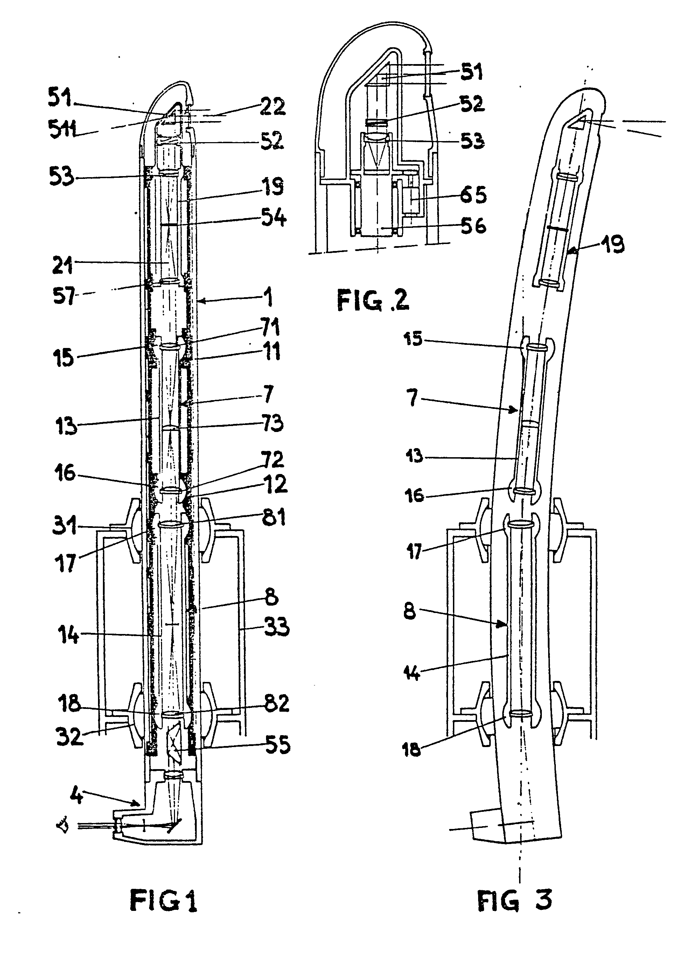

Sur la figure 1 le faisceau lumineux traverse, avant d'arriver sur le bloc oculaire, un prisme 55 à nombre impair de réflexions (prisme de Wollaston ou de Péchan) susceptible de tourner autour de l'axe optique (axe longitudinal du mât) de manière à faire tourner l'image.

Le mât optronique de la figure 2, comporte un capteur 56 (caméra de télévision) en arrière du déviateur 52 et de l'objectif 53. Ce capteur est guidé en rotation de manière à pouvoir tourner autour de l'axe longitudinal du mât sous l'action d'un moteur 65. La rotation d'image est obtenue par rotation du capteur 56 sous l'action du moteur 65. Le même résultat pourrait être obtenu par un prisme de rotation (Wollaston ou Péchan) placé avant le capteur.

Le prisme de tête 51, le diasporamètre 52, le prisme de rotation d'image 55 ou le capteur 56 sont manoeuvrés respectivement par des organes moteurs 61, 62 et 65.

Si, comme sur la figure 1, le périscope est du type à bloc oculaire fixe, le prisme 55 de rotation d'image est le même que celui servant à compenser la rotation d'image due au pointage panoramique en gisement. Dans le cas d'un périscope à bloc oculaire mobile avec le mât, un prisme 55 de rotation d'image est ajouté sur la voie optique.

Le dispositif comporte des jauges d'extensométrie 91 et 92 qui sont collées sur des parties du mât de manière que les signaux donnés par ces jauges soient représentatifs de la déformation du mât et par conséquent de l'angle de rotation de la partie supérieure du mât.

Le mât se compose d'un tube extérieur 11 qui est guidé dans les paliers et d'un tube intérieur 12 logé à l'intérieur de ce tube 11. Le tube intérieur 12 est centré dans le tube extérieur 11 par l'intermédiaire de portées de centrage échelonnées le long du mât et il est lié verticalement au tube extérieur soit par sa partie supérieure soit par sa partie inférieure. Les jauges 91 et 92 sont collées sur la surface extérieure de ce tube intérieur 12.

Les jauges 91 et 92 sont échelonnées le long du mât en formant deux groupes. Les jauges 91 d'un groupe sont disposées sur deux génératrices contenues dans un plan passant par l'axe du mât (supposé non déformé) correspondant au plan de visée, les jauges 92 de l'autre groupe étant disposées sur deux génératrices contenues dans un plan perpendiculaire au précédent et passant par l'axe du mât. La disposition de ces jauges est telle que les jauges 91 ou 92 situées sur deux génératrices associées sont disposées deux par deux dans des plans perpendiculaires à l'axe du mât. A chaque niveau il y a deux jauges 91 et deux jauges 92. Les jauges les plus basses sont situées au-dessous du palier supérieur pour tenir compte du ventre de la déformée.

Les signaux fournis par les jauges 91 et par les jauges 92 sont envoyés par l'intermédiaire de montages en ponts à un calculateur 10 qui commande les moteurs 61, 62, 65 et qui reçoit les signaux des codeurs 63, 64, 66 couplés respectivement à ces moteurs 61, 62, 65. Le calculateur 10 reçoit par ailleurs les signaux d'un codeur de gisement 67 couplé en rotation au mât et d'un manipulateur 68 dit "bête à cornes" qui est manoeuvré par l'opérateur et sert à la commande en site et gisement du périscope. En fonction des informations reçues le calculateur 10 fournit les signaux de commande des moteurs 61, 62, 65.

Le calculateur peut recevoir les signaux de la centrale de verticale équipant le sous-marin. Les informations fournies par cette centrale de verticale et par les jauges permettent de corriger la rotation d'image en jouant sur la rotation du prisme Wollaston. Il est possible d'envisager avec cette solution la mesure de la hauteur d'étoiles.

Le dispositif assure la stabilisation d'image dans le plan focal de l'oculaire. Il comporte, à l'intérieur du tube 12, des poutres rigides 13 14 qui portent chacune un système afocal 7, 8, chaque poutre étant guidée et portée, par l'intermédiaire de deux rotules 15 et 16 ou 17 et 18 se logeant dans le tube 12. Chaque poutre a une forme tubulaire permettant le logement d'un système afocal. Le dispositif comporte à la partie supérieure une poutre 19 qui est logée dans le mât (dans le tube intérieur sur la figure 1) de manière à être solidaire de celui-ci et qui porte le prisme de pointage 51, le déviateur 52, l'objectif 53, le réticule 54, et un élément de véhicule 57.

Chaque système afocal 7 ou 8 est composé de deux objectifs 71 et 72 ou 81 et 82 séparés de manière que le foyer image de l'objectif avant soit confondu avec le foyer objet de l'objectif arrière. Dans le cas où le mât est guidé par trois paliers, le système afocal inférieur est constitué de deux objectifs 81 et 82 et d'un véhicule intermédiaire qui conjugue le foyer image de l'objectif avant 81 avec le foyer objet de l'objectif arrière 82.

Les rotules 16, 17 des deux poutres adjacentes sont sensiblement concentriques. Les pupilles de chacun des systèmes afocaux sont situées au niveau des rotules qui autorisent les rotations par rapport au tube 1.

Afin de ne pas provoquer de vignettage supplémentaire en bord de champ lors des flexions, le dispositif comporte des verres de champ tels que 73 dans certains plans images.

Il est bien entendu que l'on peut sans sortir du cadre de l'invention imaginer des variantes et des perfectionnements de détail et de même envisaget l'emploi de moyens équivalents. Des soufflets pourraient être montés entre deux poutres adjacentes.

Les capteurs de mesure 91, 92 peuvent d'un autre type que des jauges d'extensomètrie. Ces capteurs peuvent être des capteurs optoélectroniques.

## Revendications

1.- Dispositif de stabilisation d'image pour périscope de sous-marin comportant un mât périscopique (1) guidé dans des paliers (31, 32) et muni d'une tête d'observation comportant un prisme déviateur (51) susceptible de pivoter autour d'un axe d'orientation (511) sous l'action de moyens moteurs (61) de manière à déplacer l'axe de visée (22) en site et à réfléchir la lumière venant du paysage vers un objectif (53) centré sur une voie (22) d'observation ou de détection, caractérisé par le fait qu' il comprend, sur ladite voie, des moyens (52, 62) pour dévier la direction d'observation perpendiculairement au plan de visée et des moyens (55, 56, 65) pour faire tourner l'image et qu' il comporte des capteurs de mesure (91, 92) de la déformation du mât qui sont fixés sur une partie (12) du mât soumise à la flexion, les signaux desdits capteurs étant envoyés à des moyens de calcul et de commande (10) contrôlant par des asservissements les moyens moteurs du prisme de tête (51), les moyens de déviation (52, 62) de la direction d'observation et les moyens (55, 56, 65) pour faire tourner l'image.

2.- Dispositif selon la revendication 1, caractérisé par le fait que les moyens de déviation (52, 62) de la direction d'observation sont constitués par un déviateur (52) du type diasporamètre dont les prismes sont déplacés en rotation par un moteur (62).

3.- Dispositif selon la revendication 1 ou 2, caractérisé par le fait que les moyens (55) pour faire tourner l'image sont constitués par un prisme (55) à nombre impair de réflexions du type Wollaston ou Péchan susceptible de pivoter autour de l'axe longitudinal du mât sous l'action d'un moteur (65).

4.- Dispositif selon la revendication 3, caractérisé par le fait que le périscope comportant ledit prisme de rotation d'image (55) est du type à bloc oculaire mobile avec le mât.

5.- Dispositif selon l'une quelconque des revendications précédentes, caractérisé par le fait que les capteurs de mesure (91, 92) sont échelonnés verticalement sur la partie du mât soumise à la flexion, dans deux plans orthogonaux passant par l'axe du mât.

6.- Dispositif selon l'une quelconque des revendications précédentes, caractérisé par le fait que le mât (1) se compose d'un tube extérieur (11) guidé par les paliers et d'un tube intérieur (12) et que les capteurs de mesure (91, 92) sont fixés à l'extérieur de ce tube intérieur.

7.- Dispositif selon l'une quelconque des revendications précédentes, caractérisé par le fait que les capteurs de mesure (91, 92) sont des jauges d'extensomètrie.

8.- Dispositif selon l'une quelconque des revendications précédentes, caractérisé par le fait que les moyens pour faire tourner l'image sont constitués par un capteur (56) du type caméra de télévision, guidé en rotation autour de l'axe vertical du mât et associé à un moteur (56) susceptible de le faire tourner.

9.- Dispositif selon l'une quelconque des revendications précédentes, caractérisé par le fait qu'il comporte, entre la tête d'observation et le bloc oculaire, au moins une poutre rigide (13 ou 14) de support d'un système afocal (71-72 ou 81-82) qui est guidée et portée à l'intérieur du mât par l'intermédiaire de deux rotules (15, 16, 17, 18).

10.- Dispositif selon la revendication 9, caractérisé par le fait qu'un système afocal porté par une poutre (14) comporte un véhicule intermédiaire monté entre les objectifs du système afocal pour conjuguer les foyers desdits objectifs.

## Patentansprüche

1. Bildstabilisierungseinrichtung für ein U-Boot-Periskop mit einem Periskopmast (1), der in Lagern (31, 32) geführt ist und mit einem Beobachtungskopf versehen ist, der einen um eine Orientierungsachse (511) unter der Einwirkung von Motorelementen (61) derart schwenkbaren Prismen-Umlenker (51) aufweist, daß eine Änderung des Höhenwinkels der Visierachse (22) erfolgt und von der Umgebung kommendes Licht zu einem Objektiv (53) reflektiert wird, welches in einem Beobachtungs- oder Ortungsweg (22) zentriert ist, dadurch gekennzeichnet, daß sie in dem Beobachtungs- oder Ortungsweg Elemente (52, 62) zum Umlenken der Beobachtungsrichtung rechtwinklig zu der Visierebene sowie Elemente (55, 56, 65) zum Drehen des Bildes umfaßt und daß sie Meßfühler (91, 92) für die Verformung des Mastes aufweist, die an einem Biegung unterworfenen Abschnitt (12) des Mastes angebracht sind und deren Signale einer Rechenund Steuereinrichtung (10) zugeführt werden, welche durch Steuerungen die Motorelemente des Prismenkopfes (51), die Elemente (52, 62) zum Umlenken der Beobachtungsrichtung sowie die Elemente (55, 56, 65) zum Drehen des Bildes regeln.

2. Einrichtung nach Anspruch 1,
dadurch gekennzeichnet, daß die Elemente (52, 62) zum Umlenken der Beobachtungsrichtung aus einem Umlenker (52) der diasporametrischen Bauart, dessen Prismen durch einen Motor (62) verdreht werden, bestehen.

3. Einrichtung nach Anspruch 1 oder 2,
dadurch gekennzeichnet, daß die Elemente (55) zum Drehen des Bildes aus einem Prisma (55) mit einer ungeraden Anzahl Reflexionsflächen der Bauart nach Wollaston oder Péchan, welches um die Längsachse des Mastes durch einen Motor (65) schwenkbar ist, bestehen.

4. Einrichtung nach Anspruch 3,
dadurch gekennzeichnet, daß das Periskop, welches das Prisma zum Drehen des Bildes (55) trägt, nach der Bauart der zusammen mit dem Mast beweglichen Okulareinheit aufgebaut ist.

5. Einrichtung nach einem der vorangehenden Ansprüche,
dadurch gekennzeichnet, daß die Meßfühler (91, 92) vertikal auf dem Abschnitt des Mastes, welcher Biegung unterworfen ist, in zwei rechtwinkligen Ebenen durch die Achse des Mastes gestaffelt sind.

6. Einrichtung nach einem der vorangehenden Ansprüche,
dadurch gekennzeichnet, daß der Mast (1) aus einem durch die Lager geführten Außenrohr (11) und einem Innenrohr (12) besteht und daß die Meßfühler (91, 92) außen an diesem Innenrohr angebracht sind.

7. Einrichtung nach einem der vorangehenden Ansprüche,
dadurch gekennzeichnet, daß die Meßfühler (91, 92) Dehnungsmeßstreifen sind.

8. Einrichtung nach einem der vorangehenden Ansprüche,
dadurch gekennzeichnet, daß die Elemente zum Drehen des Bildes aus einem Sensor (56) der Fernsehkamerabauart bestehen, der drehbar um die Vertikalachse des Mastes geführt ist und mit einem Motor (56) zu seinem Drehantrieb in Verbindung steh.

9. Einrichtung nach einem der vorangehenden Ansprüche,
dadurch gekennzeichnet, daß sie zwischen dem Beobachtungskopf und der Okulareinheit wenigstens einen festen Träger (13 oder 14) eines afokalen Systems (71-72 oder 81-82) aufweist, welcher durch zwei Kugelköpfe (15, 16, 17, 18) geführt und gehalten ist.

10. Einrichtung nach Anspruch 9,
dadurch gekennzeichnet, daß das afokale System, welches von einem Träger (14) gehalten wird, einen zwischen den Objektiven des afokalen Systems angebrachten Zwischenträger aufweist, um die Brennpunkte der Objektive zu vereinen.

**Claims**

Image-stabilizing device for the periscope of a submarine, comprising a periscope column (1) guided in bearings (31, 32) and provided with an observation head comprising a deflecting prism (51) capable of pivoting about an orientation axis (511) under the action of drive means (61) in such a manner as to displace the sight axis (22) in terms of elevation and to reflect the light coming from the Landscape towards an objective (53) centred on an observation or detection path (22), characterized in that it comprises, on the said path, means (52, 62) for deflecting the direction of observation perpendicular to the sight plane and means (55, 56, 65) for causing the image to turn and in that it comprises sensors (91, 92) for the measurement of the deformation of the column which are fixed on a part (12) of the column, which part is subjected to flexion, the signals from the said sensors being transmitted to calculating and command means (10) controlling by automatic control systems the drive means of the head prism (51), the means (52, 62) for deflecting the direction of observation and the means (55, 56, 65) for causing the image to turn.

2. Device according to claim 1, characterized in that the means (52, 62) for deflecting the direction of observation comprise a deflector (52) of the type including oppositely rotating prisms which are displaced in rotation by a motor (62).

3. Device according to claim 1 or 2, characterized in that the means (55) for causing the image to turn comprise a prism (55) having an odd number of reflections, of the Wollaston or Péchan type which is capable of pivoting about the longitudinal axis of the column under the action of a motor (65).

4. Device according to claim 3, characterized in that the periscope including the said image-rotating prism (55) is of the type comprising an eyepiece block movable with the column.

5. Device according to any one of the preceding claims, characterized in that the measurement sensors (91, 92) are spaced vertically on the part of the column, which part is subjected to flexion, in two orthogonal planes passing through the axis of the column.

6. Device according to any one of the preceding claims, characterized in that the column (1) is composed of an external tube (11) guided by the bearings and of an internal tube (12), and in that the measurement sensors (91, 92) are fixed to the exterior of this internal tube.

7. Device according to any one of the preceding claims, characterized in that the measurement sensors (91, 92) are strain gauges.

8. Device according to any one of the preceding claims, characterized in that the means for causing the image to turn comprise a sensor (56) of the television camera type, which is guided to rotate about the vertical axis of the column and associated with a motor (56) capable of causing the same to turn.

9. Device according to any one of the preceding claims, characterized in that it comprises, between the observation head and the eyepiece block, at least one rigid frame (13 or 14) to support an afocal system (71-72 or 81-82), which frame is guided and carried within the column by means of two clamping joints (15, 16, 17, 18).

10. Device according to claim 9, characterized in that an afocal system carried by a frame (14) comprises an intermediate carrier mounted between the objectives of the afocal system in order to conjugate the foci of the said objectives.

FIG 1

FIG .2

FIG 3

FIG 4